# EUROPÄISCHE PATENTANMELDUNG

(11) **EP 3 608 701 A1**
(43) Veröffentlichungstag der Anmeldung: **12.02.2020**
(21) Anmeldenummer: 18188281.2
(22) Anmeldetag: 09.08.2018
(51) Int. Cl.: G02B 21/36, G06N 3/04, G01N 21/64

(54) **VERFAHREN ZUR BEREITSTELLUNG WENIGSTENS EINER AUSWERTEMETHODE FÜR PROBEN**

(71) Anmelder: Olympus Soft Imaging Solutions GmbH, 48149 Münster (DE)
(72) Erfinder: KRÜGER, Daniel, 10119 Berlin (DE); WÖRDEMANN, Mike, 48346 Ostbevern (DE); DIEPENBROCK, Stefan, 48151 Münster (DE)
(74) Vertreter: Patentanwälte Bals & Vogel

(57) **Zusammenfassung**

Die Erfindung betrifft ein Verfahren zur Bereitstellung wenigstens einer Auswertemethode für Proben (2) bei wenigstens einem optischen Anwendungssystem (5) einer mikroskopbasierten Anwendungstechnologie,
wobei die nachfolgenden Schritte durchgeführt werden:
- Entwickeln der Auswertemethode zumindest durch ein automatisiertes Anlernen (130) eines Auswertungsmittels (60) für eine Auswertung (120) einer bestimmten Probenart auf Basis der Anwendungstechnologie durch ein optisches Trainingssystem (4), wobei durch das Anlernen (130) eine Anlerninformation (200) bestimmt wird, welche die Auswertemethode zumindest teilweise definiert,
- Bereitstellen zumindest der Anlerninformation (200) zur Verteilung (140) der Auswertemethode an das wenigstens eine Anwendungssystem (5), wobei das Bereitstellen in Abhängigkeit von der Probenart und von der Anwendungstechnologie erfolgt.

## Beschreibung

Die vorliegende Erfindung betrifft ein Verfahren zur Bereitstellung wenigstens einer Auswertemethode für Proben. Ferner bezieht sich die Erfindung auf ein System, ein Computerprogramm sowie ein computerlesbares Medium.

Es ist aus dem Stand der Technik bekannt, dass Auswertemethoden, wie Assays, bei Mikroskopen zur Untersuchung von Proben und insbesondere zum Substanzwirkungsnachweis bei der Probe genutzt werden. Hierzu werden die Auswertemethoden aufwendig entwickelt, um anhand der Probenaufzeichnung eine gewünschte Ergebnisinformation zu erhalten. Dabei können ggf. auch Algorithmen genutzt werden, um eine Bildverarbeitung bei der Probenaufzeichnung durchzuführen. Die Auswertemethoden und insbesondere die Algorithmen werden häufig anwendungsseitig in aufwendiger Weise dadurch bereitgestellt, dass sie spezifisch für die gewünschten Probenarten entwickelt und/oder angepasst werden.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Entwicklung und/oder Bereitstellung von Auswertemethoden zu ermöglichen.

Die voranstehende Aufgabe wird gelöst durch ein Verfahren mit den Merkmalen des Anspruchs 1, durch ein System mit den Merkmalen des Anspruchs 11, durch ein Computerprogramm mit den Merkmalen des Anspruchs 14 sowie durch ein computerlesbares Medium mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, dem erfindungsgemäßen Computerprogramm sowie dem erfindungsgemäßen computerlesbaren Medium, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zur Bereitstellung wenigstens einer Auswertemethode für Proben bei wenigstens einem optischen Anwendungssystem einer mikroskopbasierten Anwendungstechnologie.

Vorteilhafterweise kann bei einem erfindungsgemäßen Verfahren zumindest einer der nachfolgenden Schritte durchgeführt werden, wobei die Schritte bevorzugt nacheinander in der angegebenen Reihenfolge oder in beliebiger Reihenfolge durchgeführt werden, und ggf. auch einzelne Schritte wiederholt werden können, wobei die Schritte vorzugsweise zumindest teilweise oder vollständig automatisiert durchgeführt werden:
- Entwickeln der Auswertemethode zumindest durch ein (manuelles oder zumindest teilweise oder vollständiges) automatisiertes Anlernen eines Auswertungsmittels für eine Auswertung einer bestimmten Probenart auf Basis der (wenigstens einen) Anwendungstechnologie durch ein optisches Trainingssystem, wobei durch das Anlernen eine Anlerninformation bestimmt wird, welche die Auswertemethode zumindest teilweise definiert,
- Bereitstellen zumindest der Anlerninformation zur Verteilung der Auswertemethode an das wenigstens eine Anwendungssystem, wobei optional das Bereitstellen in Abhängigkeit von der Probenart und von der (wenigstens einen) Anwendungstechnologie erfolgt.

Dies hat den Vorteil, dass die Auswertemethode durch das Verteilen so anwendungsseitig bereitgestellt werden kann, dass diese für das Anwendungssystem und für die durch dieses Anwendungssystem untersuchte Probenart spezifisch ist. Damit kann die Bereitstellung beim Anwendungssystem verbessert und zielgerichteter durchgeführt werden und ggf. auch die Zuverlässigkeit und Genauigkeit der Auswertung mittels der Auswertemethode im Einsatz beim Anwendungssystem erhöht werden. Insbesondere wird der Ablauf bei der Entwicklung und Bereitstellung der Auswertemethode dadurch verbessert, dass das Entwickeln von einer anderen Instanz (das Trainingssystem) durchgeführt wird als die Anwendung der Auswertemethode durch das Anwendungssystem. Dies steigert die Flexibilität bei der Entwicklung und eröffnet die Möglichkeit, ein im Vergleich zum Trainingssystem einfacheres Anwendungssystem einzusetzen. Eine weitere Verbesserung kann dadurch erzielt werden, dass das Entwickeln durch ein automatisiertes (ggf. maschinelles) Anlernen erfolgt, was schneller und flexibler ist als herkömmliche Methoden. So kann das Anlernen flexibel für verschiedene Probenarten eingesetzt werden, um die hierdurch entwickelte Auswertemethode dann eingeteilt gemäß Probenart und der wenigstens einen Anwendungstechnologie, für die die Auswertemethode eingesetzt werden soll, zu verteilen. Dabei kann die Auswertemethode ggf. für nur eine bestimmte Probenart und/oder nur eine bestimmte Anwendungstechnologie, vorteilhafterweise aber auch für mehrere Probenarten und/oder Anwendungstechnologien, einsetzbar sein, und entsprechend verteilt werden.

Die Probenart kann dabei z. B. eine Zuordnung der Probe hinsichtlich der konkreten Substanzen oder Zelltypen der Probe und/oder hinsichtlich der Aufbereitung (z. B. Lebendpräparat, Dünnschichtpräparat, gefärbte Zellen, fixierte Zellen, oder dergleichen) und/oder hinsichtlich der Auswertung (Segmentierung, Klassifizierung, Regression oder dergleichen) sein. Die Anwendungstechnologie und Trainingstechnologie betrifft jeweils bspw. eine konkrete Imaging- und/oder Mikroskopietechnik (Durchlichtmikroskopie, Fluoreszenzmikroskopie oder dergleichen) und/oder eine konkrete Auswertung (Segmentierung, Klassifizierung oder dergleichen).

Die Auswertung kann dabei gemäß der Auswertemethode vorteilhafterweise dadurch erfolgen, dass wenigstens eine Erfassungsinformation gemäß der Anwendungstechnologie (z. B. wenigstens ein Bild oder eine Aufzeichnung der Probe unter Verwendung der Anwendungstechnologie) erfasst und verarbeitet wird. Durch die Verarbeitung kann dann eine Ergebnisinformation bestimmt werden, welche zusätzliche Informationen gegenüber der Erfassungsinformation liefert. Die Ergebnisinformation kann als eine Annäherung oder eine Schätzung einer Erfassungsinformation gemäß der Trainingstechnologie verstanden werden. Die Erfassungsinformation gemäß der Anwendungstechnologie ist z. B. eine Probenaufzeichnung durch das Anwendungssystem, bspw. durch eine Durchlichtmikroskopie im sichtbaren Lichtbereich, wohingegen die Erfassungsinformation gemäß der Trainingstechnologie nicht unmittelbar durch das Anwendungssystem ermittelt werden kann. Eine Probenaufzeichnung durch das Trainingssystem kann wiederum unmittelbar die Erfassungsinformation gemäß der Trainingstechnologie bereitstellen, z. B. als eine Fluoreszenzaufnahme der Probe.

Das Anlernen kann dazu geeignet sein, das Auswertungsmittel dafür zu trainieren, anhand einer Erfassungsinformation gemäß der Anwendungstechnologie die Schätzung der Erfassungsinformation gemäß der Trainingstechnologie vollautomatisiert durchzuführen. Hierzu können im Rahmen des Anlernens beide unterschiedliche Erfassungsinformationen für eine gleiche Probe (und ggf. einen zumindest teilweisen gleichen Probenbereich) - ggf. ebenfalls vollautomatisiert - ermittelt werden.

Es ist bei einem erfindungsgemäßen Verfahren denkbar, dass die Trainingstechnologie und die Anwendungstechnologie als unterschiedliche Imaging Modalitäten ausgeführt sind. Die Anwendungstechnologie kann bspw. als eine Durchlichtmikroskopie ausgeführt sein, bei welcher eine RGB-Filterung (RGB steht hierbei für die Farben rot, grün und blau) des Beleuchtungslichts (d. h. das Licht welches die Probe beleuchtet) erfolgt. Auch kann es sich um eine Durchlichtmikroskopie handeln, bei welcher die Probe ungefärbt und/oder als lebende Zelle(n) aufgezeichnet wird. Ferner ist es auch denkbar, dass eine Laserbeleuchtung mit wenigstens zwei oder wenigstens drei unterschiedlichen Farben zum Einsatz kommt. Alternativ oder zusätzlich kann auch ein "z-Stack" der Probe aufgezeichnet werden. Dabei handelt es sich um mehrere Probenaufzeichnungen in verschiedenen Ebenen parallel zur einer xy-Ebene der Probe (x und y sind dabei z. B. die Bewegungsrichtungen eines Kreuztisches, welcher die Probe im Anwendungs- und/oder Trainingssystem hält, und/oder z die Richtung entsprechend der Ausbreitungsrichtung des Beleuchtungslichts). Hierzu kann bspw. die Kamera und/oder ein Objektiv und/oder die Probe in z-Richtung an unterschiedliche Positionen bewegt werden, an denen dann eine Aufzeichnung der Probe erfolgt. Diese Bewegung wird z. B. vollautomatisiert mittels einer Motorisierung des Probentisches durchgeführt.

Das (ggf. vollständig automatisierte) Entwickeln der Auswertemethode kann zumindest durch das Anlernen des Auswertungsmittels für die Auswertung der bestimmten Probenart auf Basis der Anwendungstechnologie durch das optische Trainingssystem dadurch erfolgen, dass das Trainingssystem zur Erfassung wenigstens einer Erfassungsinformation über zumindest eine Probe (der bestimmten Probenart) sowohl die Anwendungstechnologie als auch die Trainingstechnologie nutzt. Auch können (ggf. vollautomatisiert) mehrere Proben auf diese Weise erfasst werden, wobei hier insbesondere nur Proben der bestimmten Probenart genutzt werden. Anschließend kann anhand dieser Erfassungen die Auswertung durchgeführt werden. Die Auswertung ist dabei z. B. eine Segmentierung und/oder Klassifizierung der Probe und/oder eine Auswertung gemäß einer Methode des maschinellen Lernens.

Da die Auswertung auf Basis der Anwendungstechnologie ggf. nicht vollständig den Informationsgehalt der Trainingstechnologie umfasst, kann es vorteilhaft sein, anwendungsseitig (bei dem Anwendungssystem) zusätzliche Imaging Modalitäten für die Auswertung hinzuzuziehen. Z. B. kann das Training mittels eines Fluoreszenzmarkers dazu dienen, auf Basis der Anwendungstechnologie lediglich Bereiche oder Zellkomponenten auf der Probe zu identifizieren, um dann wiederum auf dem Anwendungssystem Fluoreszenzsignale zu bestimmen. Dies führt letztlich zu weniger benötigten Fluoreszenzmarkern und reduzierten technischen Ansprüchen auf dem Anwendungssystem. In anderen Worten kann ggf. auch eine Mikroskoptechnologie bzw. Imaging Modalität, wie die Fluoreszenzmikroskopie mittels Fluoreszenzmarken, zum Training dienen, und eine (ggf. reduzierte Form) der gleichen Mikroskoptechnologie bzw. Imaging Modalität aber auch für einen anderen Einsatzzweck beim Anwendungssystem genutzt werden.

Es ist daher denkbar, dass die Trainingstechnologie und die Anwendungstechnologie sich hinsichtlich der Mikroskopietechnologie (Fluoreszenzmikroskopie, RGB-Beleuchtung, Durchlichtmikroskopie) und/oder sich durch die dabei genutzte Verarbeitung unterscheiden. Die Verarbeitung ist bspw. eine Verarbeitung der Erfassungsinformationen, wie eine Segmentierung oder dergleichen.

Bei der Erfassung unter Nutzung (also auf Basis) der Anwendungstechnologie durch das Trainingssystem (und auch durch das Anwendungssystem) wird bspw. wenigstens eine Erfassungsinformation über die Probe ermittelt, z. B. eine Aufzeichnung und/oder ein Bild der Probe. Anhand der Erfassungsinformation (und somit auf Basis der Anwendungstechnologie) kann dann mittels der Auswertung eine Ergebnisinformation bestimmt werden. Die Auswertung erfolgt bspw. derart durch das Auswertungsmittel (z. B. mittels eines neuronalen Netzes und/oder Methoden des Deep Learning und/oder künstlicher Intelligenz, welche durch das Anlernen antrainiert ist), dass die Ergebnisinformation näherungsweise einer anderen Erfassungsinformation entspricht, welche bei der Erfassung unter Nutzung (also auf Basis) der Trainingstechnologie durch das Trainingssystem ermittelt wurde. Das Ergebnis dieses Anlernens ist die Anlerninformation, welche zur späteren wiederholten (reproduzierbaren) Durchführung dieser angelernten Auswertung bei Anwendungssystemen dient. Es kann sich bei der Anlerninformation z. B. um einen Klassifikator oder um ein (insbesondere Deep Learning) Modell handeln, welches durch das Anlernen entstanden ist. Auf diese Weise wird die Auswertemethode zumindest teilweise definiert. Weiter kann auch die hierfür genutzte Probenart und/oder die Anwendungstechnologie ggf. die Auswertemethode weiter definieren.

Das Bereitstellen zumindest der Anlerninformation zur Verteilung der Auswertemethode an das wenigstens eine Anwendungssystem kann in Abhängigkeit von der Probenart und von der Anwendungstechnologie erfolgen. Hierzu findet bspw. eine Verteilung nur an solche Anwendungssysteme statt, welche die Anwendungstechnologie nutzen und/oder für die bestimmte Probenart eingesetzt werden. Um dies zu vereinfachen, kann bspw. mittels einer Datenbank eine Zuordnung der Auswertemethode (bzw. der Anlerninformation) an die genutzte Probenart und/oder Anwendungstechnologie erfolgen, z. B. mittels einer Kennzeichnung, einem Identifier oder dergleichen. Ebenfalls kann die Datenbank einen Eintrag über die Anwendungssysteme aufweisen, um hier eine Zuordnung zu der Auswertemethode durchführen zu können. Das Bereitstellen bezieht sich dabei z. B. auf eine digitale Datenspeicherung und/oder -übertragung zwischen Computersystemen.

Ein Verteilen in Abhängigkeit von der Probenart und/oder von der Anwendungstechnologie und/oder von weiteren Informationen kann z. B. auch dadurch erfolgen, dass die Anlerninformation zentral in einem Cloudsystem und/oder lokal gespeichert wird, wobei insbesondere der Anlerninformation eine Information über die Probenart und/oder über die Anwendungstechnologie und/oder über die weiteren Informationen zugeordnet wird und/oder ebenfalls abgespeichert wird. Das Speichern erfolgt bspw. auf einem dauerhaften, nicht-flüchtigen Datenspeicher und/oder in einer Datenbank.

Ferner kann es vorteilhaft sein, Informationen über eine Auswertemethode (wie z. B. Autoren und Zeitpunkt der zur Verfügungstellung von Auswertemethoden) in einer verteilten Datenbank zu speichern. Diese können z. B. redundant auf dem Trainingssystem bzw. den Trainingssystemen und/oder weiteren Computersystemen gespeichert sein. Dies kann bspw. dadurch erfolgen, dass Kopien der Informationen verteilt gespeichert sind, um durch ein Abgleichen (einer Vielzahl) dieser Kopien die Informationen sicherzustellen, sodass die Datenbank nicht durch einzelne Teilnehmer zu manipulieren ist. Es wäre zudem denkbar, diese durch ein Blockchain-Verfahren zusätzlich zu sicheren.

Das Trainingsmikroskop kann das Anlernen als ein vollautomatisiertes (d. h. insbesondere selbstlernendes) Training des Auswertungsmittels, insbesondere neuronalen Netzes und/oder Deep Learning Netzwerkes, auf einer oder vielen Proben gemäß der Probenart durchführen. Das Training kann anschließend ggf. für weitere Proben und Probenarten wiederholt werden, um weitere Auswertemethoden zu entwickeln. Die Auswertemethode und/oder das Anlernen kann bspw. wenigstens eine der nachfolgenden Auswertungen umfassen, insbesondere gemäß überwachten oder unüberwachten Lernverfahren des maschinellen Lernens:
a) Aus Bildern B ein wahrscheinlichstes Bild von A bereitstellen, und/oder
b) aus Bildern von B die wahrscheinlichste Segmentierung klassifizierter Objekte in der Probe gemäß A identifizieren, und/oder
c) eine automatische Probenauswertung mit (klassischen) Methoden der Mikroskopie und/oder einer Mischung aus Methoden unter Verwendung von a) und b) und/oder (klassischer) Analysemethoden durchführen, und/oder
d) diese Probenauswertung gemäß c) (z. B. ein daraus resultierendes Probenergebnis und/oder Bild) als Ground Truth auf Bildern des Typs B anwenden, um das Auswertungsmittel so zu trainieren, dass es das Ergebnis von c) (das aus einer Mischung aus Informationen aus A und B entstanden ist) ggf. ausschließlich mit guter Näherung aus B gewinnt, und/oder
e) zur Erhöhung der Spezifizität der Auswertemethode weitere externe Auswertungsmittel,beispielsweise auf anderen Systemen trainierte Convolutional Neuronal Networks einladen..
B ist hierbei eine Mikroskopie gemäß der Auswertungstechnologie und A eine Mikroskopie gemäß der Trainingstechnologie.

Es kann es vorteilhaft sein, wenn die Trainingstechnologie auf Basis von gestitchten Bildern durchgeführt wird, bei welchen nur ein zentraler Teilausschnitt des optisch zugänglichen Bereiches eines einzelnen Bildes (einer Probe) genutzt wird, um damit größere Bereiche des Bildes zusammenzufassen. Damit können optische Fehler in den Randbereichen der Optik vermieden werden und damit die Qualität des Ground Truth erhöht werden.

Somit ist es möglich, dass bei einer Referenzerfassung zur Erfassung von Erfassungsinformation gemäß der Trainingstechnologie für das Anlernen und/oder bei einer Referenzverarbeitung ein Stiching durchgeführt wird, um daraus eine Vergleichsinformation bzw. den Ground Truth zu erhalten.

Eine weitere mögliche Methode zur Verringerung optischer Fehler in der Beleuchtung und Abbildung ist eine schrittweise Abbildung vorzugsweise derselben Probenbereiche sowohl anhand der Trainingstechnologie als auch anhand der Anwendungstechnologie, wobei insbesondere die erfassten Probenbereiche überlappen und damit dieselben Probenbereiche verschiedene Beleuchtungsbedingungen und Abbildungsbedingungen zugeführt werden. Damit kann die Anwendungssituation breiter und robuster trainiert werden. Insbesondere gilt dies für eine Anwendung auf Transmissionsbildern in Well Plates, bei denen Miniskuseffekte und Reflektionen der Beleuchtung an Wellrändern sowie Tröpfchen auf dem Deckel der Wellplatte abhängig von der genauen Position der Aufnahmen verschiedene Beleuchtungssiutionen erzeugen können. Dies beschriebene Methode kann z. B. durch das Trainingssystem zum Anlernen durchgeführt werden.

Die Auswertemethode kann z. B. für eine der nachfolgenden Anwendungen dienen:
- Zählungen von Objekten, insbesondere Zellen der Probe,
- Wachstums- und/oder Entwicklungsbeurteilungen bei Zellen der Probe,
- Qualitätskontrolle der Fermentierung bei der Probe,
- Wirkungstest von Medikamenten, ggf. mit kontinuierlicher Anzeige der Wirkungswahrscheinlichkeiten mit der Zeit,
- Toxikologische Tests.
Die Auswertemethode kann dabei eine Einzelaufnahmen- Analyse ("Single Shot") oder eine Zeitfolgeaufnahmenanalyse aufweisen.

Vorzugsweise kann vorgesehen sein, dass das Bereitstellen (insbesondere als digitales Speichern) zentral für eine Vielzahl von Anwendungssystemen erfolgt, vorzugsweise durch eine zentrale (vorzugsweise nicht-flüchtige) Speicherung der Anlerninformation in einer Cloud (d. h. bspw. zentralen Datenspeicher oder Server) und/oder durch einen internetbasierten Datenaustausch mit dem jeweiligen Anwendungssystem. Es können z. B. als die Vielzahl von Anwendungssystemen wenigstens zwei oder wenigstens 10 oder wenigstens 50 oder wenigstens 100 oder wenigstens 500 oder wenigstens 1000 Anwendungssysteme vorgesehen sein, welche ggf. räumlich an getrennten Standorten mindestens 1 km oder mindestens 10 km voneinander entfernt angeordnet sind. Somit wird der Vorteil erzielt, dass an zentraler Stelle die Auswertemethode entwickelt werden kann, um anschließend bei Anwendungssystemen zum Einsatz zu kommen. Eine zentrale Entwicklung kann dabei eine höhere Zuverlässigkeit der Auswertungsmethode gewährleisten, da diese mit höherem technischem Aufwand durch das Trainingssystem durchgeführt werden kann als dezentral bei Anwendungssystemen. Das Bereitstellen kann bspw. als eine automatisierte Datenübertragung der Anlerninformation über ein Netzwerk (wie das Internet) an einem zentralen Server erfolgen, z. B. an einem Cloudsystem zur Bereitstellung einer Cloud. Das Cloudsystem kann hierzu ggf. auch eine Datenbank bereitstellen, in welcher neben der Anlerninformation noch weitere Informationen über die Auswertemethode gespeichert sind. Über das Cloudsystem kann auf diese Weise auch eine Zuordnung der Auswertemethode zur Probenart und/oder zur Anwendungstechnologie erfolgen.

Es ist möglich, dass das Trainingssystem technisch komplexer ausgebildet ist als das Anwendungssystem oder die Anwendungssysteme, sodass insbesondere durch das Anwendungssystem die Entwicklung der Auswertemethode technisch nicht durchführbar oder zumindest mit höherem Aufwand durchführbar ist. Es kann möglich sein, dass das Anwendungssystem weniger komplex als das Trainingssystem ausgebildet ist. Somit kann nur das Trainingssystem zur zentralen Entwicklung der Auswertemethode aufwendig hergestellt sein, und dagegen bei dem Anwendungssystem bzw. den Anwendungssystemen der technische Aufwand und die Kosten zur Herstellung reduziert werden.

Ferner kann im Rahmen der Erfindung vorgesehen sein, dass beim Anlernen zusätzlich zur Anwendungstechnologie eine mikroskopbasierte Trainingstechnologie ausgeführt wird, wodurch die Anlerninformation für eine Ermittlung eines für die Trainingstechnologie spezifischen Auswertungsergebnisses auf Basis der Anwendungstechnologie angelernt wird. In anderen Worten kann die Anlerninformation dafür geeignet sein, ein für die Trainingstechnologie spezifisches Auswertungsergebnis auf Basis der Anwendungstechnologie zu ermitteln. Das Auswertungsergebnis weist bspw. eine Ergebnisinformation auf, z. B. eine Segmentierung insbesondere klassifizierter Objekte der Probe. Dies ermöglicht es, eine für die Trainingstechnologie spezifische und damit vergleichbare Information technisch einfacherer durch die Anwendungstechnologie zu erhalten. Insbesondere ist die Segmentierung Informationsrelevanter Probenbereiche von Vorteil, da dadurch das Anlernen für die Auswertung unspezifischer Bereiche unterdrückt wird und damit die Wahrscheinlichkeit einer fehlerhaften Auswertung verringert wird.

Optional kann die Anwendungstechnologie beim Anlernen und/oder durch das Trainingssystem dadurch ausgeführt werden, dass die Anwendungstechnologie identisch zum Anwendungssystem oder nur annäherungsweise bereitgestellt und ausgeführt wird.

Ferner ist es denkbar, dass weitere Trainingssysteme vorgesehen sind, welche weitere Auswertemethoden zumindest durch das Anlernen jeweiliger Auswertungsmittel für die Auswertung weiterer bestimmter Probenarten entwickeln, wobei die Probenarten sich voneinander unterscheiden, und vorzugsweise die Trainingssysteme unabhängig voneinander das Entwickeln und/oder das Bereitstellen durchführen. Das Bereitstellen kann z. B. durch eine Datenübertragung der Anlerninformation als digitale Information (Daten) an einen für alle Trainingssysteme gemeinsamen Datenspeicher (bspw. eines Cloudsystems) erfolgen. Dies hat den Vorteil, dass auch für weitere Probenarten und/oder für weitere Anwendungstechnologien Auswertemethoden entwickelt werden können, welche optional zentral in einem Cloudsystem bereitgestellt und an die Anwendungssysteme verteilt werden können.

In einer weiteren Möglichkeit kann vorgesehen sein, dass das Entwickeln automatisiert dadurch durchgeführt wird, dass zur Erfassung einer Erfassungsinformation und/oder eines Ground Truth über eine Probe bei dem Trainingssystem vollautomatisiert eine Probenaufzeichnung durch eine Detektionsvorrichtung durchgeführt wird, und/oder klassifiziert wird, und/oder aus verschiedenen Trainingstechnologien eine Trainingstechnologie zur Erfassung des Ground Truth über die Probe ausgewählt wird. Die Erfassungsinformation und der Ground Truth stehen dabei insbesondere dadurch im Zusammenhang, dass das Auswertungsmittel angelernt wird, aus der Erfassungsinformation den Ground Truth zu bestimmen. In anderen Worten ist die Anlerninformation (als Transferinformation) für den Transfer der Erfassungsinformation in eine Ergebnisinformation gemäß dem Ground Truth spezifisch. Die automatisierte Durchführung der Erfassung, insbesondere auch einer Probenauswahl und/oder eines Wechsels zwischen verschiedenen Proben, kann dabei ein schnelles und zuverlässiges "selbstlernendes" Anlernen mit einer Vielzahl von Trainingsdaten ermöglichen. Zum vollautomatisierten Aufzeichnen der Probe und/oder zur Aufzeichnung verschiedener Proben wird bspw. ein motorisierter Probentisch oder dergleichen beim Trainingssystem verwendet. Beim Anwendungssystem kann ggf. auf einen derartigen Probentisch und/oder auf eine vollautomatisierte Probenaufzeichnung verzichtet werden, sodass hier die Probenaufzeichnung manuelle Eingriffe erfordert.

Vorteilhaft ist es darüber hinaus, wenn im Rahmen der Erfindung das Entwickeln automatisiert dadurch durchgeführt wird, dass wenigstens eine Probe zum Anlernen motorisiert im Trainingssystem bewegt wird, um eine Erfassung bei verschiedenen Positionen der Probe durchzuführen, wodurch der Ground Truth und/oder eine Erfassungsinformation zum Anlernen bestimmt wird. Die Ansteuerung dieser motorisierten Bewegung der Probe kann z. B. durch das Auswertungsmittel erfolgen, wie durch ein Computerprogramm einer Auswertevorrichtung, welche mit dem Trainingssystem verbunden oder Teil davon ist. Dies ermöglicht ein selbstständiges Anlernen durch das Trainingssystem, sodass hierbei manuelle Eingriffe nicht oder nur im reduzierten Umfang notwendig sind.

Ein weiterer Vorteil kann im Rahmen der Erfindung erzielt werden, wenn das Anwendungssystem eine anwendungsseitige Erfassung einer Probe nur gemäß der Anwendungstechnologie durchführt, welche einen geringeren Informationsgehalt über die Probe bereitstellt als eine trainingsseitige Erfassung durch das Trainingssystem, wobei vorzugsweise die Auswertemethode durch das Anlernen maschinell dazu angepasst wird, durch das Auswertungsmittel anhand der Anlerninformation und anhand der anwendungsseitigen Erfassung die trainingsseitige Erfassung näherungsweise bereitzustellen. Wenn bei dem Anwendungssystem die trainingsseitige Erfassung gemäß der Trainingstechnologie nicht möglich ist, kann die Anlerninformation eine Information darüber sein, wie eine Erfassung durch die Trainingstechnologie dennoch näherungsweise anhand der Erfassung gemäß der Anwendungstechnologie bereitgestellt werden kann. Die Trainingstechnologie ist z. B. eine Fluoreszenzmikroskopie zur Segmentierung von Zellen, und die Anwendungstechnologie nutzt dagegen bspw. ungefärbte und/oder lebende Zellen. Um dennoch eine vergleichbare Segmentierung durchführen zu können, kann z. B. maschinelles Lernen und/oder ein Deep Learning Verfahren genutzt werden. Das Ergebnis dieses Anlernens ist die Anlerninformation, welche somit eine neue Auswertemethode für das Anwendungssystem bereitstellt und/oder diese Auswertemethode in Kombination mit einem Auswertungsmittel durchführen kann.

Trainingstechnologien können bspw. technisch oder zeitlich aufwendige Verfahren sein, insbesondere aufwendiger als die Anwendungstechnologie. Die Trainingstechnologie umfasst z. B. mikroskopische Verfahren wie die Konfokalmikroskopie, Multiphotonenmikroskopie, FLIM (Fluoreszenzlebensdauer-Mikroskopie), FRET, TIRF (Förster-Resonanzenergietransfer), Raman, CARS und/oder wiederholte Anwendungen derselben Aufnahmeart zur Vergrößerung der Erfassungsdynamik oder des Signal-zu-Rausch Verhältnisses.

Als Anwendungstechnologie können insbesondere technisch oder zeitlich im Vergleich zur Trainingstechnologie weniger aufwendige Methoden umfassen wie bspw. Transmission, Dunkelfeld, Phase, Beleuchtung über eine Fresnel Linse oder Verfahren, welche eine schwer visuell interpretierbare Information enthalten (wie bspw. die Verwendung eines Gitters im Beleuchtungs- oder Observationstrahlengangs), TIRF (Interne Totalreflexionsfluoreszenzmikroskopie) oder HILO Mikroskopie oder eine Transmissionsbeleuchtung durch kohärente Lichtquellen.

Auch kann die Anwendungstechnologie eine geringere Vergrößerung als die Trainingstechnologie aufweisen, wobei insbesondere diese beim Training durch Vergrößerung und Registrierung der Erfassungsinformationen trainiert wird. Dies hat den Vorteil, dass in der Anwendung ein größeres Erfassungsfeld aufgenommen werden kann.

Es kann ferner möglich sein, dass das Anlernen durch eine Anwendung einer Trainingstechnologie erfolgt, bei welcher eine Probe verändert, vorzugsweise gefärbt oder fixiert, wird, wobei vorteilhafterweise die Auswertemethode dazu ausgeführt ist, die Anwendungstechnologie anhand der Anlerninformation bei einer unveränderten (d. h. nicht in der vorgenannten Weise verändert, z. B. ungefärbt oder unfixiert, ggf. aber anderweitig veränderten) Probe und/oder Lebendzell-Probe durchzuführen. Dennoch kann die Anlerninformation ggf. bewirken, dass das Anwendungssystem zur Bereitstellung eines näherungsweisen der Trainingstechnologie entsprechenden Ergebnisses genutzt werden kann.

Es kann im Rahmen der Erfindung vorgesehen sein, dass zum Anlernen eine Erfassungsinformation gemäß der Anwendungstechnologie und eine Vergleichsinformation, vorzugsweise ein Ground Truth, gemäß einer Trainingstechnologie über eine Probe durch das Trainingssystem ermittelt wird, wobei vorzugsweise die Anlerninformation zum Bereitstellen der Vergleichsinformation aus der Erfassungsinformation angelernt (antrainiert) wird, bevorzugt durch selbstlernende Verfahren und/oder maschinelles Lernen und/oder Deep Learning und/oder künstlicher Intelligenz und/oder künstlicher neuronaler Netze. Dies ermöglicht eine zuverlässige und technisch weniger aufwendige Ermittlung einer Ergebnisinformation mit der Auswertevorrichtung, welche zur Vergleichsinformation fast gleichwertig sein kann. Die Erfassungsinformation ist z. B. wenigstens eine Probenaufzeichnung durch Nutzung der Anwendungstechnologie und die Vergleichsinformation entsprechend eine Probenaufzeichnung durch Nutzung der Trainingstechnologie.

Vorteilhafterweise kann die Anlerninformation eine Gewichtung und/oder ein Klassifikator und/oder ein (insbesondere Deep Learning) Modell und/oder dergleichen für ein neuronales Netz sein. Bevorzugt kann die Auswertemethode ein neuronales Netz aufweisen, welches anhand der Anlerninformation parametrisiert und/oder ausgeführt wird.

Vorteilhafterweise kann im Rahmen der Erfindung vorgesehen sein, dass die Auswertemethode als ein Assay, vorzugsweise als ein Test zum Substanzwirkungsnachweis und/oder als ein Lebendzellassay, ausgeführt ist, wobei bevorzugt nach dem Bereitstellen, insbesondere durch ein Cloudsystem und/oder durch das Trainingssystem, eine Spezifizität und/oder wenigstens ein Spezifizitätsparameter der Auswertemethode bestimmt wird, bevorzugt durch einen Vergleich einer Erfassungsinformation mit wenigstens einer Vergleichsinformation. Bei dem Vergleich kann z. B. ein Grad einer Übereinstimmung dieser beiden Informationen berechnet werden. Damit kann die Auswertemethode z. B. als Untersuchungsmethode zum Nachweis der Wirksamkeit bestimmter Substanzen, insbesondere eine molekularbiologische Methode sein. Vorzugsweise kann zur Ermittlung der Spezifizität auf eine Datenbank zurückgegriffen werden.

Es kann bei einem erfindungsgemäßen Verfahren vorgesehen sein, dass eine Detektionsvorrichtung des Anwendungssystems und/oder des Trainingssystems und eine Auswertevorrichtung des Anwendungssystems und/oder des Trainingssystems zur Durchführung der Auswertemethode (insbesondere durch eine Ausführung des Auswertungsmittels anhand der Anlerninformation) und/oder des Anlernens verschlüsselt miteinander kommunizieren. Dies erschwert eine Kopie der Expertise eines angelernten neuronalen Netzes auf ein außerhalb des abgesicherten Verteilungssystems operierendes Auswertungssystems.. Auch kann es möglich sein, dass nur die Auswertevorrichtung, welche einen geheimen Schlüssel z. B. für die Verschlüsselung aufweist, die Ergebnisinformation und/oder die Erfassungsinformation und/oder die Anlerninformation an ein Cloudsystem übertragen kann. Hierzu ist bspw. eine Authentifizierung und/oder Implementierung der Verschlüsselung am Cloudsystem vorgesehen.

Ferner ist es denkbar, dass ein Wasserzeichen z. B. durch das Cloudsystem und/oder das Trainingssystems generiert wird, und vorzugsweise in die Anlerninformation integriert wird. Dies kann auch als Markierung der Anlerninformation verstanden werden. Vorteilhafterweise kann das Anwendungssystem und/oder das Cloudsystem dazu ausgeführt sein, eine unrechtmäßige Nutzung (z.B. Auswertung mithilfe der Anlerninformation, Hochladen in ein Cloudsystem) von derart markierten Anlerninformationen zu verhindern. Insbesondere kann die Integration dann stattfinden, wenn ein Abruf (z. B. ein Herunterladen) der Anlerninformation aus dem Cloudsystem erfolgt.

Das Wasserzeichen kann vorteilhafterweise in die Anlerninformation, welche als ein (vorzugsweise Deep Learning) Modell ausgeführt ist, integriert werden. Bei dem Wasserzeichen kann es sich z. B. um eine Signatur handeln. Die Einbettung des Wasserzeichens kann darauf basieren, dass eine Signatur in eine Wahrscheinlichkeitsdichtefunktion bei der Anlerninformation integriert wird. Ein Vorgehen zur Integration von Wasserzeichen in Deep Learning Modells ist bspw. in der Veröffentlichung "Rouhani, Bita & Chen, Huili & Koushanfar, Farinaz. (2018). DeepSigns: A Generic Watermarking Framework for IP Protection of Deep Learning Models, arXiv:1804.00750" beschrieben.

Ferner ist es zum weiteren Schutz der Daten denkbar, dass ein Wasserzeichen z. B. durch die Detektionsvorrichtung des Anwendungssystems und/oder des Trainingssystems generiert wird, und vorzugsweise in die Erfassungsinformation integriert wird. Vorteilhafterweise kann die Detektionsvorrichtung dazu ausgeführt sein, die Aufzeichnung der Probe nur mit einem Wasserzeichen auszugeben, um daraus die Erfassungsinformationen zu erhalten.

Die Detektionsvorrichtung führt z. B. eine Aufzeichnung der Probe durch, indem ein Abbild der Probe mittels eines Beleuchtungslichts auf einem Sensor der Detektionsvorrichtung erzeugt wird. Die Aufzeichnung kann dann als Erfassungsinformation dienen.

Ebenfalls Gegenstand der Erfindung ist ein System zur Bereitstellung wenigstens einer Auswertemethode für Proben bei wenigstens einem optischen Anwendungssystem einer mikroskopbasierten Anwendungstechnologie, aufweisend:
- das wenigstens eine Anwendungssystem,
- wenigstens ein Trainingssystem, welches sich von dem Anwendungssystem zumindest dadurch unterscheidet, dass das Trainingssystem als Mikroskoptechnologie wenigstens eine mikroskopbasierte Trainingstechnologie zusätzlich zur Anwendungstechnologie bereitstellt, jeweils zur Erfassung einer Probe, insbesondere mittels Durchlichtmikroskopie, jedoch mit unterschiedlichem Informationsgehalt.

Das Trainingssystem (nicht jedoch das Anwendungssystem) kann somit sowohl die Trainingstechnologie als auch die Anwendungstechnologie bereitstellen. Das Anwendungssystem kann ggf. durch Nutzung der Auswertemethode eine näherungsweise Trainingstechnologie bzw. eine an die Trainingstechnologie angelehnte Methode durch eine Computerverarbeitung bereitstellen. Die Trainingstechnologie und die Anwendungstechnologie betreffen somit ggf. nur optische Technologien zumindest teilweise unter Einsatz optischer Mittel, und damit nicht eine reine Computerverarbeitung.

Hierbei ist insbesondere vorgesehen, dass das Trainingssystem eine Auswertevorrichtung aufweist, welche dazu ausgeführt ist:
- ein Entwickeln der Auswertemethode zumindest durch ein (zumindest teilweise) automatisiertes Anlernen eines Auswertungsmittels für eine Auswertung einer bestimmten Probenart auf Basis der Anwendungstechnologie durchzuführen, um durch das Anlernen eine Anlerninformation zu bestimmen, welche die Auswertemethode zumindest teilweise definiert,
- ein Bereitstellen zumindest der Anlerninformation zur Verteilung der Auswertemethode an das wenigstens eine Anwendungssystem durchzuführen, wobei vorzugsweise das Bereitstellen in Abhängigkeit von der Probenart und von der Anwendungstechnologie erfolgt.

Alternativ oder zusätzlich kann die Auswertevorrichtung geeignet sein, die Schritte eines erfindungsgemäßen Verfahrens durchzuführen. Damit bringt das erfindungsgemäße System die gleichen Vorteile mit sich, wie sie ausführlich mit Bezug auf ein erfindungsgemäßes Verfahren beschrieben worden sind.

Die Auswertevorrichtung kann z. B. einen Computer aufweisen oder als ein Computer ausgebildet sein. Dabei weist die Auswertevorrichtung z. B. wenigstens einen Prozessor auf, welcher mit wenigstens einem nicht-flüchtigen Datenspeicher durch eine Signalverbindung verbunden und/oder elektronisch verschaltet sein kann. Im Datenspeicher ist bspw. ein Computerprogramm, insbesondere ein Computerprogrammprodukt, vorzugsweise ein erfindungsgemäßes Computerprogramm, nicht-flüchtig (non-transitory) gespeichert. Mittels eines Signalaustausches über die Signalverbindung kann das Computerprogramm von dem Prozessor ausgelesen werden, um das Computerprogramm (z. B. zur Durchführung zumindest einer der Verfahrensschritte eines erfindungsgemäßen Verfahrens) auszuführen. Darüber hinaus kann die Auswertevorrichtung z. B. eine Eingabevorrichtung aufweisen, um die Ausführung des Computerprogramms zu initiieren und/oder zu steuern. Zur Ausgabe von Ergebnissen des Computerprogrammes kann außerdem eine Ausgabevorrichtung vorgesehen sein, welche optional durch die Eingabevorrichtung (bspw. in der Form eines Touchscreens) bereitgestellt sein kann.

Es ist möglich, dass bei einer Ausgabevorrichtung des Anwendungssystems eine Ergebnisinformation ausgegeben wird. Die Ergebnisinformation ist bspw. das Ergebnis einer Auswertung mittels der Anlerninformation. Es ist denkbar, dass zur Ausgabe zunächst die Rohdaten der Ergebnisinformation reduziert und/oder verarbeitet werden.

Optional kann es vorgesehen sein, dass das Anwendungssystem und das Trainingssystem über jeweilige Internetverbindungen mit einem zentralen Cloudsystem verbunden sind, um internetbasiert über das Cloudsystem die Anlerninformation auszutauschen. Dies ermöglicht den Austausch flexibel auch über weite Distanzen und durch das Cloudsystem zentral und selektiv hinsichtlich der Probenart und der Anwendungstechnologie zu steuern.

Es kann außerdem möglich sein, dass das wenigstens eine Trainingssystem zumindest eine der nachfolgenden Komponenten aufweist:
- einen vollmotorisierten Probentisch, vorzugsweise zur Bewegung einer Probe in drei verschiedenen zueinander orthogonalen Richtungen,
- eine Aufnahme für eine Mikrotiterplatte für eine Probe,
- eine Aufnahme für wenigstens 4 Objektträger für eine Probe,
- eine Detektionsvorrichtung, welche als eine Farb- oder Monochromkamera oder RGB-Kamera ausgebildet ist,
- wenigstens zwei Transmissionskanäle, wobei vorzugsweise über einen ersten der Transmissionskanäle eine erste Aufzeichnung einer Probe erfolgt, um eine Erfassungsinformation zu ermitteln, und über einen zweiten der Transmissionskanäle eine zweite Aufzeichnung der gleichen Probe erfolgt, um eine Vergleichsinformation zu ermitteln,
- wenigstens ein dichroitischer Multiband-Filter, insbesondere zur Durchleitung von spektralen RGB- und Fluoreszenzbereichen und/oder zur Ausbildung eines Transmissionskanals für die erste Aufzeichnung und eines Fluoreszenzkanals für die zweite Aufzeichnung,
- wenigstens einen Prozessor einer Auswertevorrichtung, vorzugsweise eine GPU, um das Anlernen durchzuführen,
- ein (insbesondere motorisiertes) Objektivrevolver, welcher vorzugsweise mehrere gleiche Objektive desselben Typs aufweist, damit so beim Anlernen Fertigungsvariationen Berücksichtigung finden,
- einen manuell verschiebbaren Tisch, insbesondere zur Aufnahme der Probe.

Es ist denkbar, dass die Erfassungsinformation, insbesondere als Anwendungsdaten, welche z. B durch das Trainingssystem gemäß der Anwendungstechnologie erfasst wird, hinsichtlich der Anwendungstechnologie verarbeitet und/oder verändert wird. Bspw. ist es vorgesehen, dass für die konkrete Implementierung der Anwendungstechnologie in verschiedenen Anwendungssystemen unterschiedliche Varianten, wie z. B. verschiedene Objektive genutzt werden. Die Verarbeitung und/oder Veränderung kann z. B. eine Anpassung an diese Unterschiede umfassen. Auch kann es möglich sein, dass die Verarbeitung eine Konvertierung umfasst, um die Unterschiede (Abweichungen zwischen den Implementierungen der Anwendungstechnologie) vor dem Anlernen zu korrigieren.

So kann es ggf. aufwendiger sein, wenn auf jedem Trainingssystem mehrere Objektive des gleichen Typs zur Verfügung gestellt werden, um das Anlernen entsprechend breiter zu gestalten. Daher kann eine mögliche Alternative sein, dass eine syntethische Augmentierung der Auswertedaten mittels eines zentral zur Verfügung gestellten Transformationsverfahren bereitgestellt wird, welche auf die Bilder der Probe (z. B. Erfassungsinformationen) angewandt wird. Diese kann auf die im Trainingssystem gewonnen Anwendungsdaten (z. B. Erfassungsinformationen) vor dem Anlernen angewendet werden um verschiedene Objektivvariationen gleichen Typs zu emulieren.

Ebenso kann es vorteilhaft sein, wenn eine Transformation der gewonnenen Anwendungsdaten vor dem Anlernen (Training) einer Konvertierung zugeführt werden, sodass bei möglichen kleineren optischen Abweichungen zwischen der Anwendungstechnologie auf dem Trainingssystem und der auf den Anwendungssystemen diese bereits vor Durchführung des Anlernens so korrigiert werden, dass eine verbesserte Auswertung auf den Anwendungssystemen möglich ist.

Sowohl die Transformation zur Augmentierung bezüglich der Objektivfertigungsabweichungen als auch die Transformation bezüglich der optischen Unterschiede zwischen der Anwendungstechnologie auf dem Trainingssystem und dem Anwendungssystem können wiederum selbst durch, vorzugsweise zentrales, automatisiertes Anlernen gewonnen werden.

Es ist denkbar, dass das Anlernen auf Basis der Anwendungstechnologie und/oder die Ausführung der Anwendungstechnologie beim Anlernen beim Trainingssystem von einer Ausführung der Anwendungstechnologie beim Anwendungssystem abweicht. Das Trainingssystem kann daher die Anwendungstechnologie in anderer Weise als das Anwendungssystem und/oder (im Gegensatz zum Anwendungssystem) nur emuliert oder synthetisch oder durch ein neuronales Netz bereitstellen. Insbesondere kann dabei das Trainingssystem einen anderen Mikroskopaufbau zur Bereitstellung der Anwendungstechnologie aufweisen als das Anwendungssystem.

Durch die Nutzung mehrerer Kanäle bei dem Trainingssystem kann der Vorteil erzielt werden, dass sowohl die Erfassungsinformation gemäß der Anwendungstechnologie als auch eine Vergleichsinformation gemäß der Trainingstechnologie durch dasselbe Trainingssystem (wie ein einziges Mikroskop) über unterschiedliche Kanäle erfasst werden können, insbesondere gleichzeitig für einen gleichen Probenbereich.

Von weiterem Vorteil kann vorgesehen sein, dass sowohl das Trainingssystem als auch das Anwendungssystem einen gleichen (gleichartigen) Transmissionskanal aufweisen, um eine Erfassungsinformation zu ermitteln, wobei das Trainingssystem zusätzlich wenigstens einen weiteren Kanal aufweist, um ein Ground Truth für das Anlernen zu ermitteln. Der weitere Kanal dient damit zur Durchführung der Trainingstechnologie, welche technisch aufwendiger umgesetzt sein kann als die Anwendungstechnologie. Somit kann ein zuverlässiges Anlernen, insbesondere Training gemäß einem maschinellen Lernen, erfolgen, auch wenn das Trainingssystem und das Anwendungssystem baulich getrennte Systeme sind, und das Anwendungssystem selbst beim Training nicht genutzt werden kann.

Es ist bei einem erfindungsgemäßen Verfahren und/oder bei einem erfindungsgemäßen System möglich, dass die bereitgestellte Anlerninformation und/oder die verteilte Auswertemethode durch das Anwendungssystem und/oder durch ein weiteres System durch weiteres Anlernen verändert wird. Bspw. kann ein sogenanntes "Transfer Learning" hierzu eingesetzt werden. In anderen Worten kann die Auswertemethode, insbesondere ein neuronales Netz der Auswertemethode, weiter angelernt werden. Bspw. kann eine Gewichtung der Anlerninformation anhand neuer Trainingsdaten weiter spezifiziert werden. Diese veränderte Anlerninformation und/oder Auswertemethode kann dann ggf. erneut bereitgestellt bzw. verteilt werden.

Ebenfalls Gegenstand der Erfindung ist ein Computerprogramm, vorzugsweise ein Computerprogrammprodukt. Dieses kann Befehle aufweisen, die bei der Ausführung des Computerprogramms durch einen Computer (wie die Auswertevorrichtung) diesen veranlassen, die Schritte eines erfindungsgemäßen Verfahrens auszuführen. Damit bringt das erfindungsgemäße Computerprogramm die gleichen Vorteile mit sich, wie sie ausführlich mit Bezug auf ein erfindungsgemäßes Verfahren beschrieben worden sind. Das Computerprogramm kann dabei optional auch als herunterladbares digitales Signal ausgeführt sein.

Ebenfalls Gegenstand der Erfindung ist ein computerlesbares Medium, auf welchem (insbesondere nicht-flüchtig) ein erfindungsgemäßes Computerprogramm gespeichert ist. Damit bringt das erfindungsgemäße computerlesbares Medium die gleichen Vorteile mit sich, wie sie ausführlich mit Bezug auf ein erfindungsgemäßes Computerprogramm beschrieben worden sind. Das computerlesbare Medium ist beispielsweise als ein (dauerhafter, bzw. engl. non-transitory) Datenspeicher, wie ein Flashspeicher oder eine Festplatte oder dergleichen ausgeführt. Das computerlesbare Medium kann dabei optional auch als herunterladbares digitales Signal ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung zur Visualisierung eines erfindungsgemäßen Verfahrens,
- Fig. 2: eine schematische Darstellung eines erfindungsgemäßen Systems.

In den nachfolgenden Figuren werden für die gleichen technischen Merkmale auch von unterschiedlichen Ausführungsbeispielen die identischen Bezugszeichen verwendet.

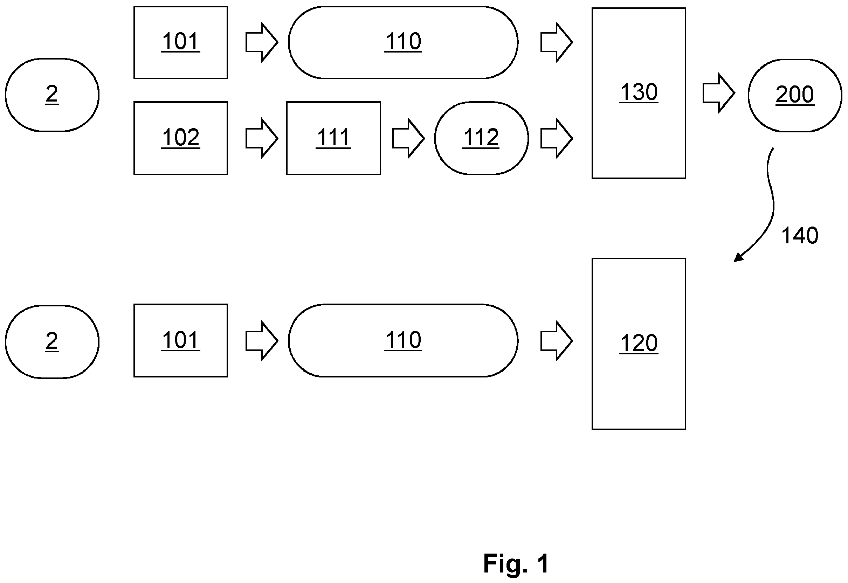

In Figur 1 ist schematisch ein erfindungsgemäßes Verfahren visualisiert. Das Verfahren dient dabei zur Bereitstellung wenigstens einer Auswertemethode für Proben 2 bei wenigstens einem optischen Anwendungssystem 5, welches gemäß einer mikroskopbasierten Anwendungstechnologie ausgeführt ist.

Hierzu kann gemäß einem ersten Verfahrensschritt ein Entwickeln der Auswertemethode zumindest durch ein (zumindest teilweise) automatisiertes Anlernen 130 eines Auswertungsmittels 60 erfolgen, wobei das Anlernen 130 für eine Auswertung 120 einer bestimmten Probenart auf Basis der Anwendungstechnologie spezifisch ist. Der erste Verfahrensschritt kann durch ein optisches Trainingssystem 4 durchgeführt werden, wobei durch das Anlernen 130 eine Anlerninformation 200 bestimmt wird, welche die Auswertemethode zumindest teilweise definiert. Anschließend kann gemäß einem zweiten Verfahrensschritt ein Bereitstellen zumindest der Anlerninformation 200 zur Verteilung 140 der Auswertemethode an das wenigstens eine Anwendungssystem 5 erfolgen, wobei das Bereitstellen ggf. in Abhängigkeit von der Probenart und von der Anwendungstechnologie z. B. ebenfalls durch das Trainingssystem 4 durchgeführt wird.

Es ist gezeigt, dass zum Anlernen 130 zunächst eine Erfassung 101 einer Probe 2 durchgeführt werden kann, um eine Erfassungsinformation 110 zu ermitteln. Diese Erfassungsinformation 110 (wie eine Aufnahme der Probe 2) wird gemäß einer Anwendungstechnologie ermittelt, z. B. einer Durchlichtmikroskopie von lebenden Zellen. Entscheidend kann dabei sein, dass diese Anwendungstechnologie derselben Technologie entspricht, die auch bei dem Anwendungssystem 5 zum Einsatz kommt. Anschließend kann zum Anlernen 130 eine Referenzerfassung 102 durchgeführt werden. Diese dient dazu, eine Erfassungsinformation gemäß einer Trainingstechnologie zu erfassen, welche vom Anwendungssystem 5 nicht unterstützt wird. Es handelt sich dabei z. B. um eine Fluoreszenzmikroskopie. Optional kann anschließend eine Referenzverarbeitung 111, wie eine Segmentierung 111, bei der Erfassungsinformation gemäß der Trainingstechnologie durchgeführt werden. Auf diese Weise kann ein Ground Truth 112 ermittelt werden, welcher als eine Vergleichsinformation 112 für das Anlernen 130 dient. Das Anlernen erfolgt dabei in der Weise, dass eine Auswertung 120 durch ein Auswertungsmittel 60 anhand einer Anlerninformation 200 zumindest näherungsweise die Vergleichsinformation 112 und/oder den Ground Truth 112 anhand der Erfassungsinformation 110 gemäß der Anwendungstechnologie automatisiert berechnen kann. Danach wird nach erfolgreichem Training die Anlerninformation 200, z. B. in der Form von digitalen Daten, an wenigstens ein Anwendungssystem 5 verteilt (gemäß einem Verteilen 140). Dort kann dann ebenfalls die Erfassung 101 gemäß der Anwendungstechnologie durchgeführt werden, um die Auswertung 120 mit der Anlerninformation 200 zu nutzen.

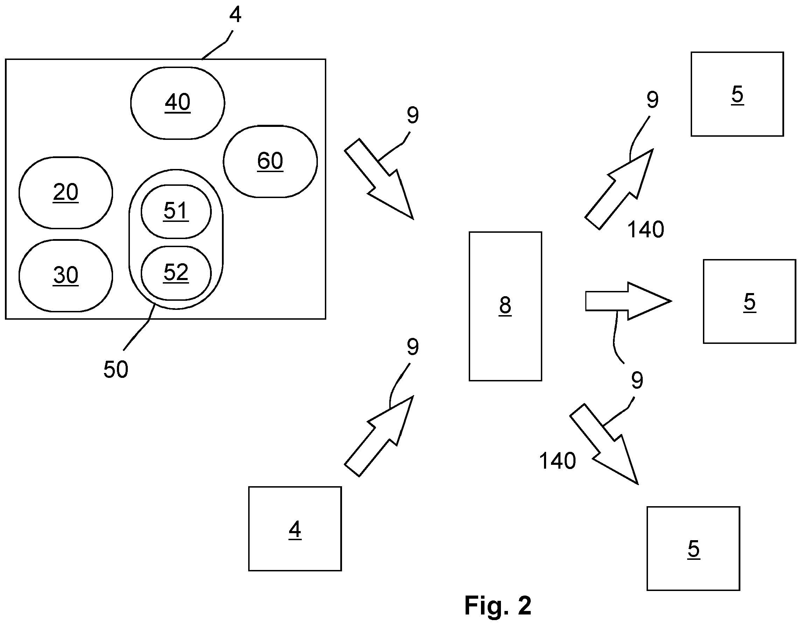

In Figur 2 ist schematisch ein erfindungsgemäßes System gezeigt, welches auch zur Veranschaulichung eines erfindungsgemäßen Verfahrens dient. Zunächst ist dabei ein Trainingssystem 4 mit weiteren Einzelheiten gezeigt. Dieses umfasst eine Abbildungsoptik 20, um eine Abbildung der Probe 2 bei einer Detektionsvorrichtung 40, insbesondere einer Kamera 40, abzubilden. Hierzu kann ein Beleuchtungslicht einer Lichtquelle 30 genutzt werden. Anschließend kann eine Auswertevorrichtung 50, wie ein Computer mit einem Prozessor 51 und/oder Datenspeicher 52, zur Ausführung eines Auswertungsmittel 60 (wie eines Computerprogramms 60) zur Auswertung 120 und/oder zum Anlernen 130 genutzt werden. Dieser Aufbau und/oder eine Auswertevorrichtung 50 kann in entsprechender Weise bei einem Anwendungssystem 5 vorgesehen sein, ggf. in technisch vereinfachter Ausführung. Somit ist der beschriebene Aufbau repräsentativ auch für weitere Trainings- und Auswertungssysteme 4, 5 zu verstehen, welche ggf. nicht identisch aufgebaut sein müssen. Entscheidend kann sein, dass sowohl das Trainingssystem 4 als auch das Anwendungssystem 5 eine identische oder ähnliche Anwendungstechnologie implementieren. Das Trainingssystem 4 kann (im Gegensatz zum Anwendungssystem 5) die Anwendungstechnologie z. B. auch nur synthetisch emulieren, z. B. durch ein neuronales Netz. Damit können bei dem Trainingssystem 4 auch Anwendungstechnologien genutzt werden, welche sich hardwareseitig nicht implementieren lassen. Hingegen sollte für die identische Ausbildung der Anwendungstechnologie, sowohl bei dem Trainings- als auch bei dem Anwendungssystem 4, 5, ggf. auch eine zumindest ähnliche Abbildungsoptik 20 und Lichtquelle 30 bei beiden vorgesehen sein. Die Anlerninformation 200 kann dann - um die Auswertemethode für die Anwendungssysteme 5 nutzbar zu machen - z. B. über eine Internetverbindung 9 an ein Cloudsystem 8 übertragen werden. Von dort lässt sich die Anlerninformation 200 z. B. von wenigstens ein oder mehreren Anwendungssystemen 5 abrufen. Auf diese Weise kann das Verteilen 140 erfolgen, um technisch einfacher und zuverlässiger die Auswertemethode bereitzustellen. Sämtliche Auswertungs- und Trainingssysteme 5, 4 können dabei unabhängig voneinander betrieben werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 2: Probe
- 4: Trainingssystem, Trainingsmikroskop
- 5: Anwendungssystem
- 8: Cloudsystem, zentrales Computersystem zum Cloud Computing
- 9: Internetverbindung

- 20: Abbildungsoptik

- 30: Lichtquelle

- 40: Detektionsvorrichtung, Kamera

- 50: Auswertevorrichtung, Computer
- 51: Prozessor
- 52: Datenspeicher

- 60: Auswertungsmittel

- 101: Erfassung
- 102: Referenzerfassung
- 110: Erfassungsinformation
- 111: Referenzverarbeitung, Segmentierung in 2D oder 3D
- 112: Ground Truth, Vergleichsinformation

- 120: Auswertung, Machine learning inference
- 130: Anlernen, Machine learning training

- 140: Verteilen
- 200: Anlerninformation, Transferinformation, trainiertes Modell

## Patentansprüche

1. Verfahren zur Bereitstellung wenigstens einer Auswertemethode für Proben (2) bei wenigstens einem optischen Anwendungssystem (5) einer mikroskopbasierten Anwendungstechnologie,
wobei die nachfolgenden Schritte durchgeführt werden:
- Entwickeln der Auswertemethode zumindest durch ein automatisiertes Anlernen (130) eines Auswertungsmittels (60) für eine Auswertung (120) einer bestimmten Probenart auf Basis der Anwendungstechnologie durch ein optisches Trainingssystem (4), wobei durch das Anlernen (130) eine Anlerninformation (200) bestimmt wird, welche die Auswertemethode zumindest teilweise definiert,
- Bereitstellen zumindest der Anlerninformation (200) zur Verteilung (140) der Auswertemethode an das wenigstens eine Anwendungssystem (5), wobei das Bereitstellen in Abhängigkeit von der Probenart und von der Anwendungstechnologie erfolgt.

2. Verfahren nach Anspruch 1,
**dadurch gekennzeichnet,**
**dass** das Bereitstellen zentral für eine Vielzahl von Anwendungssystemen (5) erfolgt, vorzugsweise durch eine zentrale Speicherung der Anlerninformation (200) in einer Cloud und/oder durch einen internetbasierten Datenaustausch mit dem jeweiligen Anwendungssystem (5).

3. Verfahren nach Anspruch 1 oder 2,
**dadurch gekennzeichnet,**
**dass** beim Anlernen (130) zusätzlich zur Anwendungstechnologie eine mikroskopbasierte Trainingstechnologie ausgeführt wird, wodurch die Anlerninformation (200) für eine Ermittlung eines für die Trainingstechnologie spezifischen Auswertungsergebnisses auf Basis der Anwendungstechnologie angelernt wird.

4. Verfahren nach einem der vorhergehenden Ansprüche,
**dadurch gekennzeichnet,**
**dass** weitere Trainingssysteme (4) vorgesehen sind, welche weitere Auswertemethoden zumindest durch das Anlernen (130) jeweiliger Auswertungsmittel (60) für die Auswertung weiterer bestimmter Probenarten entwickeln, wobei die Probenarten sich voneinander unterscheiden, und vorzugsweise die Trainingssysteme (4) unabhängig voneinander das Entwickeln und/oder das Bereitstellen durchführen.

5. Verfahren nach einem der vorhergehenden Ansprüche,
**dadurch gekennzeichnet,**
**dass** das Entwickeln automatisiert dadurch durchgeführt wird, dass zur Erfassung (101) einer Erfassungsinformation (110) und/oder eines Ground Truth (112) über eine Probe (2) bei dem Trainingssystem (4) vollautomatisiert eine Probenaufzeichnung durch eine Detektionsvorrichtung (40) durchgeführt wird, und/oder klassifiziert wird, und/oder aus verschiedenen Trainingstechnologien eine Trainingstechnologie zur Erfassung (101) des Ground Truth (112) über die Probe (2) ausgewählt wird.

6. Verfahren nach einem der vorhergehenden Ansprüche,
**dadurch gekennzeichnet,**
**dass** das Entwickeln automatisiert dadurch durchgeführt wird, dass wenigstens eine Probe (2) zum Anlernen (130) motorisiert im Trainingssystem (4) bewegt wird, um eine Erfassung (101) bei verschiedenen Positionen der Probe (2) durchzuführen, wodurch ein Ground Truth (112) und/oder eine Erfassungsinformation (110) zum Anlernen (130) bestimmt wird.

7. Verfahren nach einem der vorhergehenden Ansprüche,
**dadurch gekennzeichnet,**
**dass** das Anwendungssystem (5) eine anwendungsseitige Erfassung (101) einer Probe (2) nur gemäß der Anwendungstechnologie durchführt, welche einen geringeren Informationsgehalt über die Probe (2) bereitstellt als eine trainingsseitige Erfassung (101) durch das Trainingssystem (4), wobei die Auswertemethode durch das Anlernen (130) maschinell dazu angepasst wird, durch das Auswertungsmittel (60) anhand der Anlerninformation (200) und anhand der anwendungsseitigen Erfassung (101) die trainingsseitige Erfassung (102, 111, 112) näherungsweise bereitzustellen.

8. Verfahren nach einem der vorhergehenden Ansprüche,
**dadurch gekennzeichnet,**
**dass** das Anlernen (130) durch eine Anwendung einer Trainingstechnologie erfolgt, bei welcher eine Probe (2) verändert, vorzugsweise gefärbt oder fixiert, wird, wobei die Auswertemethode dazu ausgeführt ist, die Anwendungstechnologie anhand der Anlerninformation (200) bei einer unveränderten Probe (2) durchzuführen.

9. Verfahren nach einem der vorhergehenden Ansprüche,
**dadurch gekennzeichnet,**
**dass** zum Anlernen (130) eine Erfassungsinformation (110) gemäß der Anwendungstechnologie und eine Vergleichsinformation (112), vorzugsweise ein Ground Truth (112), gemäß einer Trainingstechnologie über eine Probe (2) durch das Trainingssystem (4) ermittelt wird, wobei die Anlerninformation (200) zum Bereitstellen der Vergleichsinformation (112) aus der Erfassungsinformation (110) angelernt wird, bevorzugt durch selbstlernende Verfahren und/oder maschinelles Lernen und/oder Deep Learning und/oder künstlicher Intelligenz und/oder künstlicher neuronaler Netze.

10. Verfahren nach einem der vorhergehenden Ansprüche,
**dadurch gekennzeichnet,**
**dass** die Auswertemethode als ein Assay, vorzugsweise als ein Test zum Wirksamkeitsnachweis einer Substanz und/oder als ein Lebendzellassay, ausgeführt ist, wobei bevorzugt nach dem Bereitstellen, insbesondere durch ein Cloudsystem (8) und/oder durch das Trainingssystem (4), eine Spezifizität der Auswertemethode bestimmt wird, bevorzugt durch einen Vergleich einer Erfassungsinformation (110) mit wenigstens einer Vergleichsinformation (112).

11. System zur Bereitstellung wenigstens einer Auswertemethode für Proben (2) bei wenigstens einem optischen Anwendungssystem (5) einer mikroskopbasierten Anwendungstechnologie, aufweisend:
- das wenigstens eine Anwendungssystem (5),
- wenigstens ein Trainingssystem (4), welches sich von dem Anwendungssystem (5) zumindest dadurch unterscheidet, dass das Trainingssystem (4) als Mikroskoptechnologie wenigstens eine mikroskopbasierte Trainingstechnologie zusätzlich zur Anwendungstechnologie bereitstellt, jeweils zur Erfassung einer Probe (2), jedoch mit unterschiedlichem Informationsgehalt,
wobei das Trainingssystem (4) eine Auswertevorrichtung (50) aufweist, welche dazu ausgeführt ist,
- ein Entwickeln der Auswertemethode zumindest durch ein automatisiertes Anlernen (130) eines Auswertungsmittels (60) für eine Auswertung (120) einer bestimmten Probenart auf Basis der Anwendungstechnologie durchzuführen, um durch das Anlernen (130) eine Anlerninformation (200) zu bestimmen, welche die Auswertemethode zumindest teilweise definiert,
- ein Bereitstellen zumindest der Anlerninformation (200) zur Verteilung (140) der Auswertemethode an das wenigstens eine Anwendungssystem (5) durchzuführen, wobei das Bereitstellen in Abhängigkeit von der Probenart und von der Anwendungstechnologie erfolgt,
und insbesondere dazu geeignet ist, die Schritte eines Verfahrens nach einem der Ansprüche 1 bis 10 durchzuführen.

12. System nach Anspruch 11,
**dadurch gekennzeichnet,**
**dass** das Anwendungssystem (5) und das Trainingssystem (4) über jeweilige Internetverbindungen (9) mit einem zentralen Cloudsystem (8) verbunden sind, um internetbasiert über das Cloudsystem (8) die Anlerninformation (200) auszutauschen.

13. System nach Anspruch 11 oder 12,
**dadurch gekennzeichnet,**
**dass** sowohl das Trainingssystem (4) als auch das Anwendungssystem (5) einen gleichen Transmissionskanal aufweisen, um eine Erfassungsinformation (110) zu ermitteln, wobei das Trainingssystem (4) zusätzlich wenigstens einen weiteren Kanal aufweist, um einen Ground Truth (112) für das Anlernen (130) zu ermitteln.

14. Computerprogramm, umfassend Befehle, die bei der Ausführung des Computerprogramms durch einen Computer (50) diesen veranlassen, die Schritte eines Verfahrens nach einem der Ansprüche 1 bis 10 auszuführen.

15. Computerlesbares Medium, auf dem das Computerprogramm nach Anspruch 14 gespeichert ist.
